# EUROPEAN PATENT APPLICATION

(11) **EP 4 503 550 A1**
(43) Date of publication of application: **05.02.2025**
(21) Application number: 22934744.8
(22) Date of filing: 09.10.2022
(51) Int. Cl.: H04L 43/0852

(54) **METHOD AND APPARATUS FOR MONITORING MULTI-PATH END-TO-END DELAY, AND ELECTRONIC DEVICE AND MEDIUM**

(30) Priority: 29.03.2022 CN 202210325181
(71) Applicant: ZTE Corporation, Shenzhen, Guangdong 518057 (CN)
(72) Inventor: ZHU, Xiangyang, Shenzhen, Guangdong 518057 (CN); YU, Jinghai, Shenzhen, Guangdong 518057 (CN)
(74) Representative: WBH Wachenhausen Patentanwälte PartG mbB
(86) International application number: PCT/CN2022/124168
(87) International publication number: WO 2023/184926

(57) **Abstract**

Disclosed in the embodiments of the present application are a method and apparatus for monitoring a multi-path end-to-end delay, and an electronic device and a medium. The method for monitoring a multi-path end-to-end delay comprises: receiving operation administration and maintenance (OAM) messages of services that are sent via a plurality of paths, wherein each OAM message carries a sending timestamp of a sending end (201); according to the sending timestamp of the OAM message of each path and a marked receiving timestamp, acquiring an end-to-end delay of the OAM message of each path (202); and respectively comparing the end-to-end delay of the OAM message of each path with a preset end-to-end delay range, so as to obtain a monitoring result of the end-to-end delay of the OAM message of each path (203).

## Description

### CROSS-REFERENCE TO RELATED APPLICATION

This application is filed on the basis of Chinese patent application No. 202210325181.X filed March 29, 2022, and claims priority to the Chinese patent application, the entire contents of which are incorporated herein by reference.

### TECHNICAL FIELD

Embodiments of the present disclosure relate to the technical field of network communication, and more particularly, to a method and apparatus for monitoring end-to-end delays of a plurality of paths, an electronic device, and a medium.

### BACKGROUND

In an end-to-end service path set, the currently active service path is referred to as the main path, while all other service paths are designated as standby paths. When the main path experiences a fault, the service is automatically switched from the main path to a standby path. In this case, the forwarding plane still needs to be able to bear the service reliably, meaning the end-to-end delay of the standby path is required to be within specified upper and lower bounds. Therefore, it is essential to monitor the end-to-end delay through an Operation, Administration, and Maintenance (OAM) mechanism and ensure that both the main path and the standby paths meet the service delay requirements during network operation.

While In-band Operation, Administration, and Maintenance (iOAM) or the Two-Way Active Measurement Protocol (TWAMP) can realize the measurement of the delay of the main path, they cannot measure delays of a plurality of paths (including both the main path and the standby paths).

### SUMMARY

A main objective of embodiments of the present disclosure is to provide a method and apparatus for monitoring end-to-end delays of a plurality of paths, an electronic device, and a medium.

To at least achieve the above objective, an embodiment of the present disclosure provides a method for monitoring end-to-end delays of a plurality of paths, including: receiving OAM packets of a service respectively sent via a plurality of paths, where each of the OAM packets carries a sending timestamp of a sending end which sends the OAM packet; acquiring an end-to-end delay of the OAM packet corresponding to each respective path according to the sending timestamp of the OAM packet corresponding to the respective path and a marked receiving timestamp; and respectively comparing the end-to-end delay of the OAM packet corresponding to the respective path with a preset end-to-end delay range, to obtain an end-to-end delay monitoring result for the OAM packet corresponding to the respective path.

To at least achieve the above objective, an embodiment of the present disclosure provides an apparatus for monitoring end-to-end delays of a plurality of paths, including: a receiving module, configured for receiving OAM packets of a service respectively sent via a plurality of paths, where each of the OAM packets carries a sending timestamp of a sending end which sends the OAM packet; an acquisition module, configured for acquiring an end-to-end delay of the OAM packet corresponding to each respective path according to the sending timestamp of the OAM packet corresponding to the respective path and a marked receiving timestamp; and a monitoring module, configured for respectively comparing the end-to-end delay of the OAM packet corresponding to the respective path with a preset end-to-end delay range, to obtain an end-to-end delay monitoring result for the OAM packet corresponding to the respective path.

To at least achieve the above objective, an embodiment of the present disclosure provides a server, including: at least one processor; and a memory communicatively connected to the at least one processor, where the memory stores instructions executable by the at least one processor which, when executed by the at least one processor, cause the at least one processor to carry out the method for monitoring end-to-end delays of a plurality of paths.

To at least achieve the above objective, an embodiment of the present disclosure provides a computer-readable storage medium, storing a computer program which, when executed by a processor, causes the processor to carry out the method for monitoring end-to-end delays of a plurality of paths.

### BRIEF DESCRIPTION OF DRAWINGS

One or more embodiments are illustrated by the diagrams in the corresponding drawings and these illustrative descriptions are not intended to constitute a limitation to the embodiments. Same or like elements are denoted by the same reference numerals in the drawings. The drawings are not drawn to scale unless otherwise particularly stated.
FIG. 1 is a schematic diagram of paths of service packets;
FIG. 2 is a flowchart one of a method for monitoring end-to-end delays of a plurality of paths according to an embodiment of the present disclosure;
FIG. 3 is a schematic diagram of a deterministic networking (DetNet) Associated Channel Header (d-ACH) encapsulation format according to an embodiment of the present disclosure;
FIG. 4 is a schematic diagram of a Redundancy Tag (R-Tag) encapsulation format according to an embodiment of the present disclosure;
FIG. 5 is a flowchart two of a method for monitoring end-to-end delays of a plurality of paths according to an embodiment of the present disclosure;
FIG. 6 is a schematic diagram one of paths according to an embodiment of the present disclosure;
FIG. 7 is a schematic diagram two of paths according to an embodiment of the present disclosure;
FIG. 8 is a schematic diagram of an encapsulation format of an OAM packet according to an embodiment of the present disclosure;
FIG. 9 is a flowchart three of a method for monitoring end-to-end delays of a plurality of paths according to an embodiment of the present disclosure;
FIG. 10 is a schematic diagram three of paths according to an embodiment of the present disclosure;
FIG. 11 is a schematic diagram four of paths according to an embodiment of the present disclosure;
FIG. 12 is a schematic diagram of an apparatus for monitoring end-to-end delays of a plurality of paths according to an embodiment of the present disclosure; and
FIG. 13 is a schematic structural diagram of an electronic device according to an embodiment of the present disclosure.

### DETAILED DESCRIPTION

Purposes, technical schemes and advantages of the embodiments of the present disclosure will become clear from a detailed description of the embodiments of the present disclosure in conjunction with the drawings. However, it may be understood by those having ordinary skills in the art that although various embodiments of the present disclosure provide many technical details to make readers better understand the present disclosure. the technical schemes claimed in the present disclosure can be realized even without these technical details and various variations and modifications made based on the following embodiments. The following embodiments are divided for convenience of description and are not intended to constitute any limitation on the specific implementations of the present disclosure. The embodiments may be combined or used as references for each other if not in collision.

For ease of understanding, related technologies of the method for monitoring end-to-end delays of a plurality of paths in the embodiments of the present disclosure are described as follows.

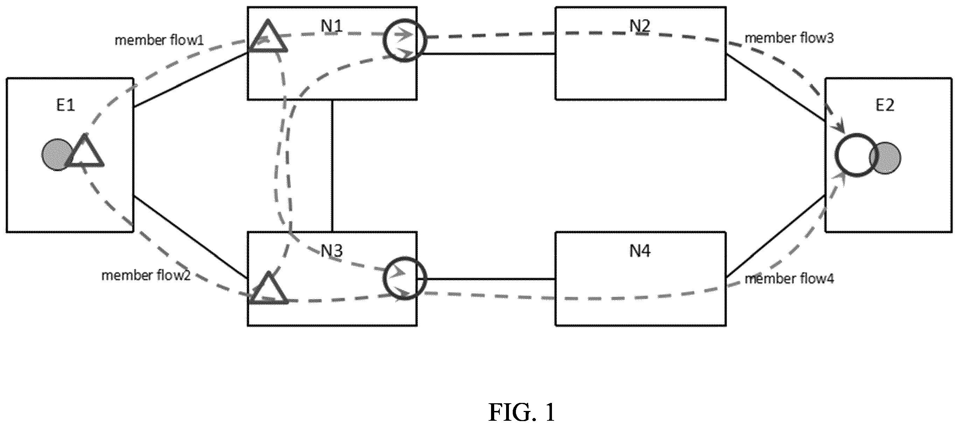

Through Package Replicate Eliminate Function (PREF), i.e., a packet replication function and a packet elimination function configured in intermediate nodes for transmitting service packets, redundant path protection can be provided for service packets when the network is faulty, thereby improving the service reliability. Referring to FIG. 1, a control plane plans transmission paths for service packets and configuration locations of the packet duplication function and the packet elimination function according to a state of the network and a service request. In FIG. 1, triangles represent the packet duplication function, i.e., service packet duplication, and hollow circles represent the packet elimination function, i.e., service packet elimination. In this case, an end-to-end service path set in FIG. 1 includes four possible service packet transmission paths: E1->N1->N2->E2, E1->N1->N3->N4->E2, E1->N3->N4->E2, and E1->N3->N1->N2->E2.

Although the control plane ensures that the planned service paths meet Quality of Service (QoS) requirements of the service, whether actual service paths meet the requirements cannot be fully ensured due to various reasons such as dynamic traffic changes, network faults, control plane algorithm errors, or parameter configuration delivery failure, etc. However, the existing related technologies can only measure a delay of a main path in the service paths, but cannot measure delays of standby paths, i.e., inactive paths. Therefore, the embodiments of the present disclosure provide a method for monitoring end-to-end delays of a plurality of paths, which can realize the measurement of end-to-end delays of a plurality of paths.

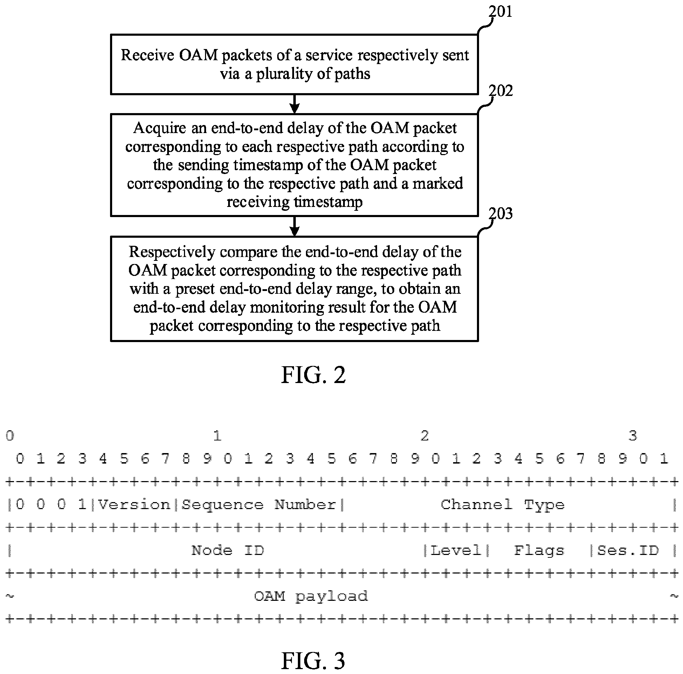

An embodiment of the present disclosure relates to a method for monitoring end-to-end delays of a plurality of paths, which is applied to a service packet receiving end or a controller. Application scenarios of the embodiments of the present disclosure may include, but not limited to, monitoring of end-to-end delays of a plurality of paths in Time Sensitive Networking (TSN) or Deterministic Networking (DetNet). Implementation details of the method for monitoring end-to-end delays of a plurality of paths in this embodiment will be described below and the following contents are provided only for convenience of understanding and are not necessary for implementing the present scheme. FIG. 2 is a flowchart of an example implementation of this embodiment, including the following steps.

In a step of 201, OAM packets of a service respectively sent via a plurality of paths are received.

In an example, a plurality of paths are planned for a service in advance, i.e., a packet duplication function and a packet elimination function are configured in service packet transmission paths, and after OAM packets of the service are sent by a sending end, the OAM packets of the service sent via the plurality of paths can be received. The quantity of paths is a natural number greater than or equal to 1.

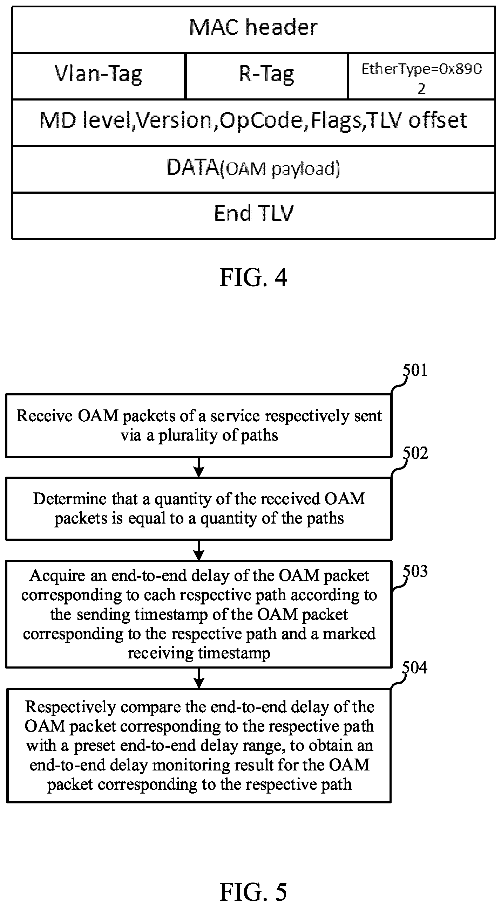

It can be understood that the sending end first needs to construct the OAM packets. In an example, the OAM packets are constructed based on a definition in an existing standard. For example, in a DetNet network, the type of the OAM packets is defined as d-ACH Channel Type=0x10, where the d-ACH encapsulation format is as shown in FIG. 3; in a TSN network, the type of the OAM packets is defined as R-Tagopcode=0x10 using a format in the Y.1731 standard, where the R-Tag encapsulation format is as shown in FIG. 4. OAM encapsulation based on other network encapsulation modes have been defined in related protocols, so the details will not be described in detail herein.

In an example, each OAM packet carries information of all nodes in the path that it passes through, i.e., every time the OAM packet passes through a node, information of the node is recorded. For example, an identifier (ID) of the node is of 2 octets, and a type of node is of 1 octet.

In an example, the OAM packet also needs to carry a service sequence number indicating the service executed, a sending timestamp of the sending end, and a detection type flag (detectFlag). The detection type flag is used for indicating an end-to-end delay of the OAM packet corresponding to each respective path. For example, the detection type flag detectFlag may be defined as type=3 and length=2 octets.

It should be noted that the field length, type definition, and encapsulation format of the packet in this embodiment are described by way of example only, and are not intended to limit the present disclosure.

In a step of 202, an end-to-end delay of the OAM packet corresponding to each respective path is acquired according to the sending timestamp of the OAM packet corresponding to the respective path and a marked receiving timestamp.

In an example, the end-to-end delay of the OAM packet corresponding to each respective path can be obtained by subtracting the sending timestamp from the receiving timestamp of the OAM packet corresponding to the path.

In an example, the sending timestamp txTimestamp may be defined as type=1 and length=2 octets, and the receiving timestamp rxTimeStamp may be defined as type=2 and length=2 octets.

In an example, after the end-to-end delay of the OAM packet corresponding to each respective path is acquired, path information of the end-to-end delay can be obtained according to the information of all nodes carried in each OAM packet, i.e., a correspondence between the end-to-end delays of the packets and the paths can be determined. In this way, the end-to-end delays of the paths can be monitored in a more targeted manner.

In a step of 203, the end-to-end delay of the OAM packet corresponding to each respective path is respectively compared with a preset end-to-end delay range, to obtain an end-to-end delay monitoring result for the OAM packet corresponding to the respective path.

In an example, the end-to-end delay of the OAM packet corresponding to each respective path is compared with the preset end-to-end delay range; if the end-to-end delay of a path exceeds an upper bound of the preset end-to-end delay range or is lower than a lower bound of the preset end-to-end delay range, it is determined that an end-to-end delay monitoring result of this path is unqualified; if the end-to-end delay of a path is greater than or equal to the lower bound of the preset end-to-end delay range and is less than the upper bound of the preset end-to-end delay range, it is determined that an end-to-end delay monitoring result of this path is qualified.

In an example, after the monitoring result of the end-to-end delay of the OAM packet corresponding to each respective path is obtained, the monitoring result of the path is sent to a designated node, for example, a controller. Subsequent actions of the designated node do not fall within the scope of the present disclosure, so the details will not be described in detail herein.

In this embodiment, OAM packets of a service respectively sent via a plurality of paths are received, where each of the OAM packets carries a sending timestamp of a sending end which sends the OAM packet; an end-to-end delay of the OAM packet corresponding to each respective path is acquired according to the sending timestamp of the OAM packet corresponding to the respective path and a marked receiving timestamp; and then the end-to-end delay of the OAM packet corresponding to the respective path is respectively compared with a preset end-to-end delay range, to obtain an end-to-end delay monitoring result for the OAM packet corresponding to the respective path. Therefore, in the embodiment of the present disclosure, end-to-end delays of a plurality of paths can be monitored, to ensure that the end-to-end delay of each path meets the delay requirement of the service in the process of network operation, thereby stably bearing the service.

In an embodiment, the method for monitoring end-to-end delays of a plurality of paths in the embodiment of the present disclosure is applied to a receiving end. FIG. 5 is a flowchart of an example implementation of this embodiment, including the following steps.

In a step of 501, OAM packets of a service respectively sent via a plurality of paths are received.

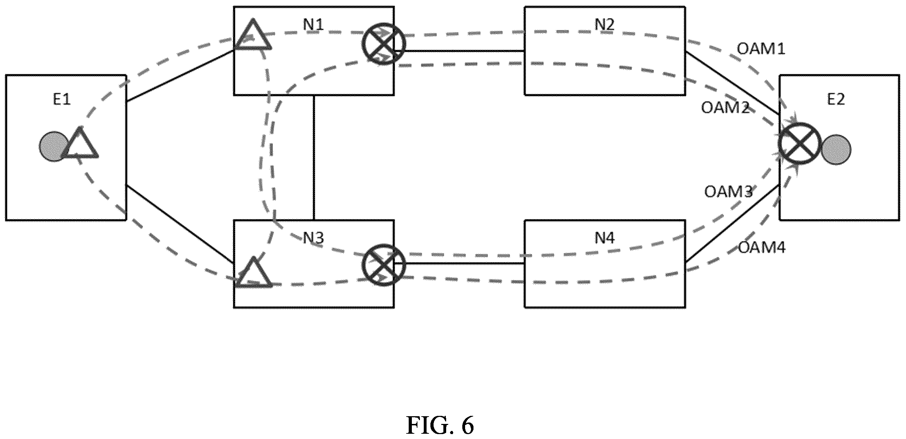

Transmission of the OAM packets in this embodiment may be transmitted via paths shown in FIG. 6, where E1 represents a sending end, E2 represents a receiving end, N1, N2, N3, and N4 are intermediate nodes configured with a packet duplication function and a packet elimination function. Nodes having the packet duplication function in each path use the packet duplication function for the OAM packets, as shown by triangle symbols in the figure, and nodes having the packet elimination function in each path do not use the packet elimination function for the OAM packets, as shown by ⊗ symbols in the figure, i.e., nodes with ⊗ symbols do not use the packet elimination function for the OAM packets. Dashed lines in the figure represent the paths of the OAM packets, including: E1->N1->N2->E2, E1->N3->N1->N2->E2, E1->N1->N3->N4->E2, and E1->N3->N4->E2. E2 receives four packets from four paths, where a packet OAM1 is transmitted via the path E1->N1->N2->E2, a packet OAM2 is transmitted via the path E1->N3->N1->N2->E2, a packet OAM3 is transmitted via the path E1->N1->N3->N4->E2, and a packet OAM4 is transmitted via the path E1->N3->N4->E2.

In this embodiment, the nodes having the packet elimination function in each path do not use the packet elimination function for OAM packets, and normally use the packet elimination function for other types of packets.

It should be noted that FIG. 6 is merely an example, and there may be various schematic diagrams of paths in practice. For example, more paths may be provided for OAM packets by adding intermediate nodes and configuring the packet duplication function and the packet elimination function.

In a step of 502, it is determined that a quantity of the received OAM packets is equal to a quantity of the paths.

In an example, after receiving the OAM packets, the receiving end first determines that the quantity of received OAM packets is equal to the quantity of paths, to ensure that OAM packets corresponding to all paths are received, so as to monitor end-to-end delays of the paths.

In a step of 503, an end-to-end delay of the OAM packet corresponding to each respective path is acquired according to the sending timestamp of the OAM packet corresponding to the respective path and a marked receiving timestamp.

In this embodiment, the marked receiving timestamp includes a timestamp of the OAM packet marked by the receiving end, and after receiving the OAM packets of the service sent by the sending end via the plurality of paths, the receiving end marks a receiving timestamp for the OAM packet corresponding to each respective path.

In a step of 504, the end-to-end delay of the OAM packet corresponding to each respective path is respectively compared with a preset end-to-end delay range, to obtain an end-to-end delay monitoring result for the OAM packet corresponding to the respective path.

In an example, the method for monitoring end-to-end delays of a plurality of paths in this embodiment may be implemented in the following manner.

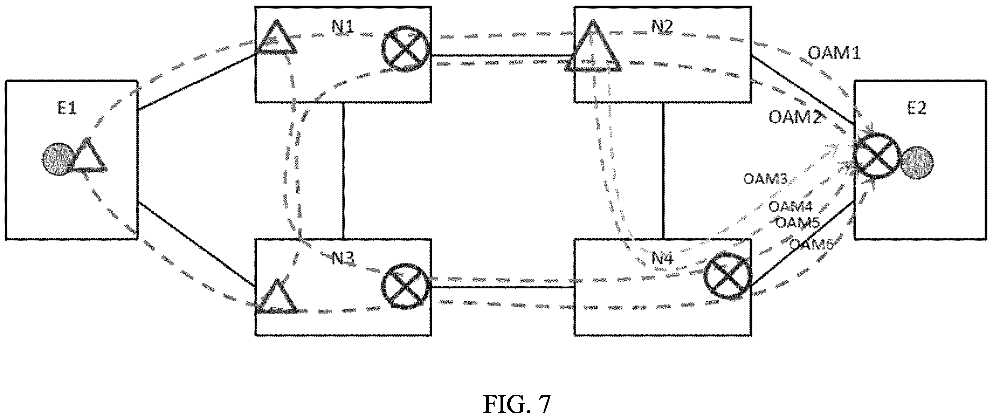

First, paths are planned for the service, such that a schematic diagram of paths that the OAM packets of the service pass through is as shown in FIG. 7. The packet duplication function is used in E1, N1, N2, and N3, and the packet elimination function is used in N2, N3, N4, and E2. In this case, there are six service paths, and the receiving end can receive six OAM packets. In addition, an upper bound of 100 and a lower bound of 50 for the end-to-end delay are configured at the receiving end.

Data carried in each OAM packet is shown in Table 1:

**Table 1**

| OAM packet | Sending timestamp | Receiving timestamp | Detection type flag | Path |
|---|---|---|---|---|
| OAM1 | 1000 | 1080 | 1 | E1->N1->N2->E2 |
| OAM2 | 1000 | 1070 | 1 | E1->N3->N1->N2->E2 |
| OAM3 | 1000 | 1075 | 1 | E1->N3->N1->N2->N4->E2 |
| OAM4 | 1000 | 1110 | 1 | E1->N1->N2->N4->E2 |
| OAM5 | 1000 | 1090 | 1 | E1->N1->N3->N4->E2 |
| OAM6 | 1000 | 1060 | 1 | E1->N3->N4->E2 |

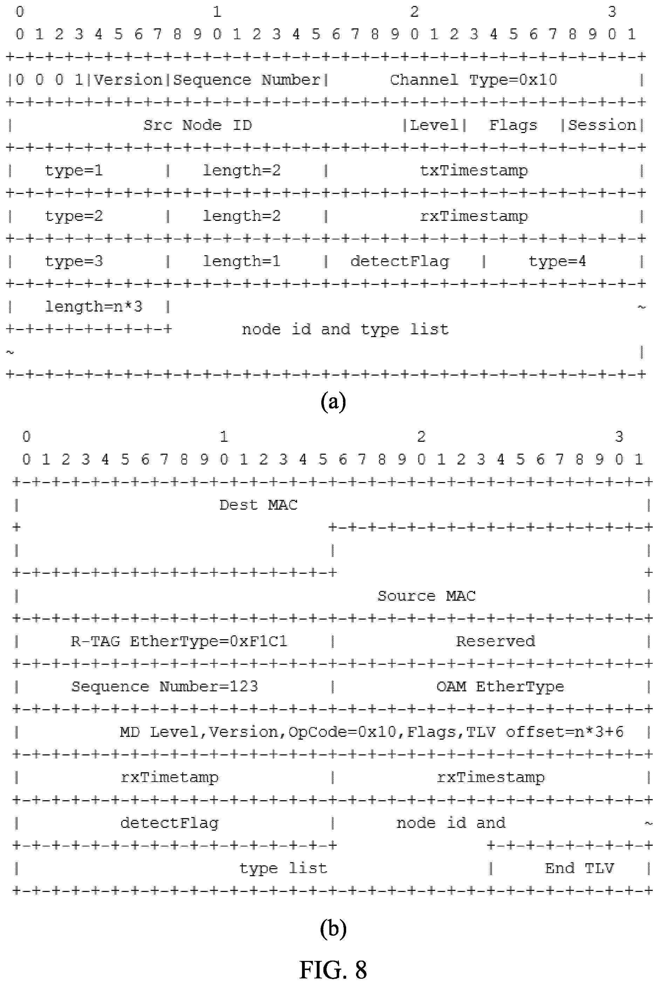

FIG. 8 is a schematic diagram of encapsulation formats of OAM packets in a DetNet network and a TSN network, where FIG. 8(a) is a schematic diagram of an encapsulation format of an OAM packet in the DetNet network, and FIG. 8(b) is a schematic diagram of an encapsulation format of an OAM packet in the TSN network.

After determining that the quantity of received OAM packets is equal to the quantity of paths, the receiving end subtracts the sending timestamp from the receiving timestamp for the OAM packet of each path in Table 1 to determine whether the end-to-end delay falls within a range of 50 to 100. It is found through calculation that the end-to-end delay of the packet OAM4 of the path E1->N1->N2->N4->E2 exceeds the upper bound of the preset end-to-end delay range, and an end-to-end delay monitoring result of the packet OAM4 of the path E1->N1->N2->N4->E2 is unqualified; and the end-to-end delays of the OAM packets of the other paths fall within the preset end-to-end delay range, and thus meet the requirements.

After completing the monitoring, the receiving end E2 may send the monitoring result, i.e., a message indicating that the end-to-end delay monitoring result of the packet OAM4 is unqualified, to a designated node through Netconf or other protocols.

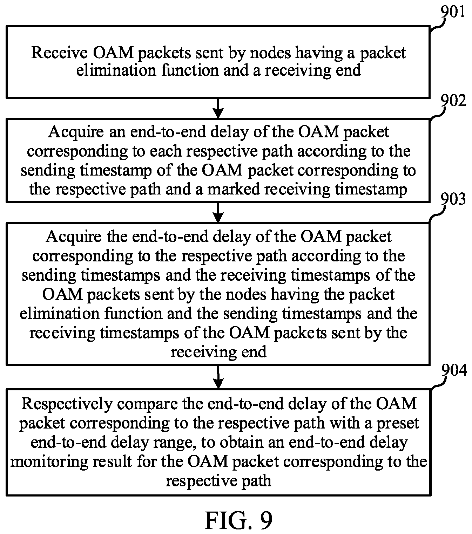

In another embodiment, the method for monitoring end-to-end delays of a plurality of paths in the embodiment of the present disclosure is applied to a controller. FIG. 9 is a flowchart of an example implementation of this embodiment, including the following steps.

In a step of 901, OAM packets sent by nodes having a packet elimination function and a receiving end are received.

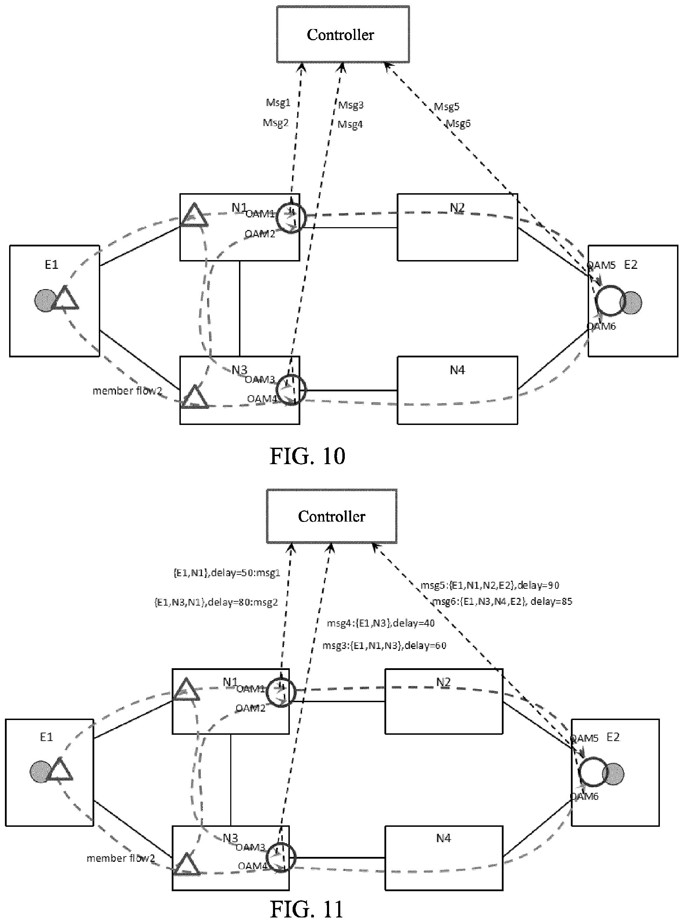

Transmission of the OAM packets in this embodiment may be transmitted via paths shown in FIG. 10, where E1 represents a sending end, E2 represents the receiving end, N1, N2, N3, and N4 are intermediate nodes, triangles represent a packet duplication function, and hollow circles represent a packet elimination function. Dashed lines in the figure represent the paths of the OAM packets, including: E1->N1, E1->N3->N1, E1->N1->N3, E1->N3, E1->N1->N2->E2, and E1->N3->N4->E2. The controller receives a packet OAM1 via E1->N1, a packet OAM2 via E1->N3->N1, a packet OAM3 via E1->N1->N3, and a packet OAM4 via E1->N3, and receives two packets OAM5 and OAM6 from the receiving end, where paths of OAM5 are E1->N1->N2->E2 and E1->N3->N4->E2, and paths of OAM6 are E1->N1->N2->E2 and E1->N3->N4->E2.

It should be noted that FIG. 10 is merely an example, and there may be various schematic diagrams of paths in practice. For example, more paths may be provided for OAM packets by adding intermediate nodes and configuring the packet duplication function and the packet elimination function.

In a step of 902, an end-to-end delay of the OAM packet corresponding to each respective path is acquired according to the sending timestamp of the OAM packet corresponding to the respective path and a marked receiving timestamp.

The marked receiving timestamp includes a receiving timestamp marked by a node having the packet elimination function before eliminating the OAM packet and a receiving timestamp marked by the receiving end. To be specific, when receiving an OAM packet, the node having the packet elimination function first marks a receiving timestamp on the OAM packet, and send the OAM packet to the controller before eliminating the OAM packet. When receiving an OAM packet, the receiving end marks a receiving timestamp on the OAM packet and sends the OAM packet to the controller. As such, the controller can receive the OAM packets sent by the nodes having the packet elimination function and the receiving end.

In a step of 903, the end-to-end delay of the OAM packet corresponding to each respective path is acquired according to the sending timestamps and the receiving timestamps of the OAM packets sent by the nodes having the packet elimination function and the sending timestamps and the receiving timestamps of the OAM packets sent by the receiving end.

In an example, the controller acquires a first end-to-end delay of each of first-type paths based on the sending timestamp and the receiving timestamp of the OAM packet sent by the receiving end. The first-type paths include the path E1->N1->N2->E2 of OAM5 and the path E1->N3->N4->E2 of OAM6 in FIG. 10. Then, the controller acquires a second end-to-end delay of the OAM packet sent from the sending end of the first-type path to a node having the packet elimination function according to the sending timestamp and the receiving timestamp of the OAM packet sent by the node having the packet elimination function in the first-type path. Paths from the sending end of the first path to nodes having the packet elimination function include the path E1->N1 of OAM1, the path E1->N3->N1 of OAM2, the path E1->N1->N3 of OAM3, and the path E1->N3 of OAM4 in FIG. 10. The controller may determine a third end-to-end delay of the OAM packet from the node having the packet elimination function to the receiving end in the first-type path according to the first end-to-end delay and the second end-to-end delay, i.e., by subtracting the second end-to-end delay from the first end-to-end delay. Paths from nodes having the packet elimination function to the receiving end in the first-type path include N1->N2->E2 and N3->N4->E2 in FIG. 10. Then, the controller acquires a fourth end-to-end delay of the OAM packet sent from the sending end of each of second-type paths to a node having the packet elimination function according to the sending timestamp and the receiving timestamp of the OAM packet sent by the node having the packet elimination function in the second-type path. The second-type paths include E1->N3->N1->N2->E2 and E1->N1->N3->N4->E2 in FIG. 10. Paths from the sending end of the second-type path to the nodes having the packet elimination function include E1->N3->N1 and E1->N1->N3 in FIG. 10. The controller may determine an end-to-end delay of the OAM packet of the second-type path according to the third end-to-end delay and the fourth end-to-end delay, i.e., by adding the third end-to-end delay and the fourth end-to-end delay.

In an example, the packets OAM1, OAM2, OAM3, OAM4, OAM5, and OAM6 are respectively sent to the controller through messages Msg1, Msg2, Msg3, Msg4, Msg5, and Msg6.

For example, the end-to-end delay of the OAM packet of the path E1->N3->N1->N2->E2 may be obtained by subtracting the end-to-end delay of OAM1 from the end-to-end delay of OAM5 to obtain a difference and adding the difference to the end-to-end delay of OAM2. The end-to-end delay of the OAM packet of the path E1->N1->N3->N4->E2 may be obtained by subtracting the end-to-end delay of OAM4 from the end-to-end delay of OAM6 to obtain a difference and adding the difference to the end-to-end delay of OAM3.

In a step of 904, the end-to-end delay of the OAM packet corresponding to each respective path is respectively compared with a preset end-to-end delay range, to obtain an end-to-end delay monitoring result for the OAM packet corresponding to the respective path.

In an example, the method for monitoring end-to-end delays of a plurality of paths in this embodiment may be implemented in the following manner.

First, paths are planned for the service, such that a schematic diagram of paths that the OAM packets of the service pass through is as shown in FIG. 11. The packet duplication function is used in E1, N1, and N2, and the packet elimination function is used in N2, N3, and E2. The controller receives Msg1, Msg2, Msg3, and Msg4, where Msg1 carries a packet OAM1 of E1->N1, Msg2 carries a packet OAM2 of E1->N3->N1, Msg3 carries a packet OAM3 of E1->N1->N3, and Msg4 carries a packet OAM4 of E1->N3; and receives Msg5 and Msg6 from the receiving end, where Msg5 carries a packet OAM5 of E1->N1->N2->E2 and Msg6 carries a packet OAM6 of E1->N3->N4->E2. In addition, an upper bound of 100 and a lower bound of 50 for the end-to-end delay are configured at the controller.

Data carried in each Msg message is shown in Table 2:

**Table 2**

| Msg | Path | Delay |
|---|---|---|
| Msg1 | E1->N1 | 50 |
| Msg2 | E1->N3->N1 | 80 |
| Msg3 | E1->N1->N3 | 60 |
| Msg4 | E1->N3 | 40 |
| Msg5 | E1->N1->N2->E2 | 90 |
| Msg6 | E1->N3->N4->E2 | 85 |

FIG. 8 is a schematic diagram of encapsulation formats of OAM packets in a DetNet network and a TSN network, where FIG. 8(a) is a schematic diagram of an encapsulation format of an OAM packet in the DetNet network, and FIG. 8(b) is a schematic diagram of an encapsulation format of an OAM packet in the TSN network.

It can be seen from Table 2 that the delay of the packet OAM5 of the first-type path E1->N1->N2->E2 is 90, the delay of the packet OAM1 from the sending end of the first-type path to the node having the packet elimination function, i.e., the path E1->N1 is 50, and the delay of the OAM packet from the node having the packet elimination function to the receiving end in the first-type path, i.e., the path N1->N2->E2, is delay(msg5)-delay(msg1)=40; and the delay of the packet OAM2 from the sending end of the second-type path E1->N3->N1->N2->E2 to the node having the packet elimination function in the second-type path, i.e., the path E1->N3->N1, is 80, and the delay of the OAM packet of the second-type path E1->N3->N1->N2->E2 is 40+delay(msg2)=120. Similarly, the end-to-end delay of the OAM packet of the path E1->N1->N3->N4->E2 is equal to delay(msg6)-delay(msg4)+delay(msg3)=105.

In this case, the end-to-end delays of the OAM packets of the paths E1->N3->N1->N2->E2 and E1->N1->N3->N4->E2 both exceed the upper bound requirement of the service delay. Therefore, end-to-end delay monitoring results of the OAM packets of the paths E1->N3->N1->N2->E2 and E1->N1->N3->N4->E2 are unqualified.

It should be noted that the examples in the embodiments of the present disclosure are described for ease of understanding, and are not intended to limit the technical schemes of the embodiments of the present disclosure.

It should be understood that the division of the steps of the above methods is only for the sake of clear description, and in practical applications, the steps may be combined into one step, or some steps may be divided into multiple steps. Such combination or division falls within the scope of protection of the present disclosure as long as the same logical relationship is included. Any insignificant modification made to or any insignificant design introduced in an algorithm or process without changing the core design of the algorithm and process shall fall within the scope of protection of the present disclosure.

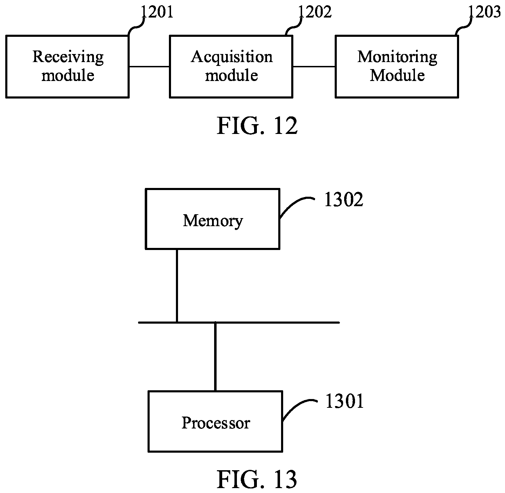

Another embodiment of the present disclosure relates to an apparatus for monitoring end-to-end delays of a plurality of paths. Implementation details of the apparatus for monitoring end-to-end delays of a plurality of paths in this embodiment will be described below and the following contents are provided only for convenience of understanding and are not necessary for implementing this example. FIG. 12 is a schematic diagram of an apparatus for monitoring end-to-end delays of a plurality of paths in this embodiment, including a receiving module 1201, an acquisition module 1202, and a monitoring module 1203.

In an example, the receiving module 1201 is configured for receiving OAM packets of a service respectively sent via a plurality of paths, where each of the OAM packets carries a sending timestamp of a sending end which sends the OAM packet.

In an example, when the method for monitoring end-to-end delays of a plurality of paths is applied to a controller, the receiving module 1201 is further configured for receiving the OAM packets sent by nodes having a packet elimination function and a receiving end.

The acquisition module 1202 is configured for acquiring an end-to-end delay of the OAM packet corresponding to each respective path according to the sending timestamp of the OAM packet corresponding to the respective path and a marked receiving timestamp.

In an example, the acquisition module 1202 is further configured for acquiring the end-to-end delay of the OAM packet corresponding to each respective path according to the sending timestamps and the receiving timestamps of the OAM packets sent by the nodes having the packet elimination function and the sending timestamps and the receiving timestamps of the OAM packets sent by the receiving end.

In an example, the acquisition module 1202 is further configured for acquiring a first end-to-end delay of each of first-type paths based on the sending timestamp and the receiving timestamp of the OAM packet sent by the receiving end; acquiring a second end-to-end delay of the OAM packet sent from the sending end of the first-type path to a node having the packet elimination function according to the sending timestamp and the receiving timestamp of the OAM packet sent by the node having the packet elimination function in the first-type path; determining a third end-to-end delay of the OAM packet from the node having the packet elimination function to the receiving end in the first-type path according to the first end-to-end delay and the second end-to-end delay; acquiring a fourth end-to-end delay of the OAM packet sent from the sending end of each of second-type paths to a node having the packet elimination function according to the sending timestamp and the receiving timestamp of the OAM packet sent by the node having the packet elimination function in the second-type path; and determining an end-to-end delay of the OAM packet of the second-type path according to the third end-to-end delay and the fourth end-to-end delay.

It can be seen that this embodiment is an apparatus embodiment corresponding to the foregoing method embodiments, and this embodiment may be implemented in combination with the foregoing method embodiments. The related technical details and technical effects mentioned in the foregoing method embodiments are still valid in this embodiment, and the details will not be repeated herein to avoid repetition. Correspondingly, the related technical details mentioned in this embodiment are also applicable to the above embodiments.

It is to be noted that each module involved in this embodiment is a logic module. In practical applications, a logic unit may be a physical unit or a part of a physical unit, or may be implemented by a combination of a plurality of physical units. In addition, in order to highlight the innovative part of the present disclosure, units that are not closely related to the technical problem to be solved in the present disclosure are not introduced in this embodiment, but this does not mean that there are no other units in this embodiment.

Another embodiment of the present disclosure relates to an electronic device. As shown in FIG. 13, the electronic device includes: at least one processor 1301; and a memory 1302 communicatively connected to the at least one processor 1301. The memory 1302 stores instructions executable by the at least one processor 1301 which, when executed by the at least one processor 1301, cause the at least one processor 1301 to carry out the method for monitoring end-to-end delays of a plurality of paths according to the foregoing method embodiments.

The memory and the processor are connected by a bus. The bus may include any number of interconnected buses and bridges. The bus connects various circuits of one or more processors and the memory together. The bus may also connect together a peripheral device, a voltage regulator, a power management circuit, and other circuits, which are well known in the art and therefore will not be detailed herein. A bus interface provides an interface between the bus and a transceiver. The transceiver may be one element or a plurality of elements, for example, a plurality of receivers and transmitters, and provides a unit for communicating with various other apparatus over a transmission medium. Data processed by the processor is transmitted over a wireless medium through an antenna. In an example, the antenna further receives data and transmits the data to the processor.

The processor is configured for managing the bus and general processing and may also provide various functions including timing, peripheral interfaces, voltage regulation, power management and other control functions. The memory may be configured for storing data used by the processor in performing operations.

Another embodiment of the present disclosure relates to a computer-readable storage medium, storing a computer program which, when executed by a processor, causes the processor to carry out the foregoing method embodiments.

According to the method for monitoring end-to-end delays of a plurality of paths in the present disclosure, OAM packets of a service respectively sent via a plurality of paths are received, where each of the OAM packets carries a sending timestamp of a sending end which sends the OAM packet; an end-to-end delay of the OAM packet corresponding to each respective path is acquired according to the sending timestamp of the OAM packet corresponding to the respective path and a marked receiving timestamp; and then the end-to-end delay of the OAM packet corresponding to the respective path is respectively compared with a preset end-to-end delay range, to obtain an end-to-end delay monitoring result for the OAM packet corresponding to the respective path. Therefore, in the embodiment of the present disclosure, end-to-end delays of a plurality of paths can be monitored, to ensure that the end-to-end delay of each respective path meets the delay requirement of the service in the process of network operation, thereby stably bearing the service.

It may be understood by those having ordinary skills in the art that all or some of the steps of the methods in the above embodiments may be performed by a program instructing related hardware. The program is stored in a storage medium, and includes several instructions which, when executed by a device (which may be a single chip microcomputer, a chip, etc.) or a processor, cause the device or the processor to implement all or some of the steps of the methods described in the embodiments of the present disclosure. The foregoing storage medium includes: any medium that can store program code, such as a Universal Serial Bus (USB) flash drive, a removable hard disk, a Read-Only Memory (ROM), a Random Access Memory (RAM), a magnetic disk, or an optical disk.

It may be understood by those having ordinary skills in the art that the foregoing embodiments are specific embodiments for practicing the present disclosure and that in practical applications, various changes in form and details may be made without departing from the essence and scope of the present disclosure.

## Claims

1. A method for monitoring end-to-end delays of a plurality of paths, comprising:
receiving Operation, Administration, and Maintenance (OAM) packets of a service respectively sent via the plurality of paths, wherein each of the OAM packets carries a sending timestamp of a sending end which sends the OAM packet;
acquiring an end-to-end delay of the OAM packet corresponding to each respective path according to the sending timestamp of the OAM packet corresponding to the respective path and a marked receiving timestamp; and
respectively comparing the end-to-end delay of the OAM packet corresponding to the respective path with a preset end-to-end delay range, to obtain an end-to-end delay monitoring result for the OAM packet corresponding to the respective path.

2. The method for monitoring end-to-end delays of the plurality of paths of claim 1, wherein the method is applied to a receiving end, the marked receiving timestamp comprises a timestamp of the OAM packet marked by the receiving end, and nodes having a packet elimination function in each of the paths do not use the packet elimination function for the OAM packet.

3. The method for monitoring end-to-end delays of the plurality of paths of claim 2, wherein before acquiring an end-to-end delay of the OAM packet corresponding to each respective path, the method further comprises:
determining that a quantity of the received OAM packets is equal to a quantity of the paths.

4. The method for monitoring end-to-end delays of the plurality of paths of claim 1, wherein the method is applied to a controller; and receiving OAM packets of a service respectively sent via a plurality of paths comprises:
receiving the OAM packets sent by nodes having a packet elimination function and a receiving end;
the marked receiving timestamp comprises a receiving timestamp marked by a node having the packet elimination function before eliminating the OAM packet and a receiving timestamp marked by the receiving end; and
acquiring an end-to-end delay of the OAM packet corresponding to each respective path according to the sending timestamp of the OAM packet corresponding to the respective path and a marked receiving timestamp comprises:
acquiring the end-to-end delay of the OAM packet corresponding to each respective path according to the sending timestamps and the receiving timestamps of the OAM packets sent by the nodes having the packet elimination function and the sending timestamps and the receiving timestamps of the OAM packets sent by the receiving end.

5. The method for monitoring end-to-end delays of the plurality of paths of claim 4, wherein acquiring the end-to-end delay of the OAM packet corresponding to each respective path according to the sending timestamps and the receiving timestamps of the OAM packets sent by the nodes having the packet elimination function and the sending timestamps and the receiving timestamps of the OAM packets sent by the receiving end comprises:
acquiring a first end-to-end delay of each of first-type paths based on the sending timestamp and the receiving timestamp of the OAM packet sent by the receiving end;
acquiring a second end-to-end delay of the OAM packet sent from the sending end of the first-type path to a node having the packet elimination function according to the sending timestamp and the receiving timestamp of the OAM packet sent by the node having the packet elimination function in the first-type path;
determining a third end-to-end delay of the OAM packet from the node having the packet elimination function to the receiving end in the first-type path according to the first end-to-end delay and the second end-to-end delay;
acquiring a fourth end-to-end delay of the OAM packet sent from the sending end of each of second-type paths to a node having the packet elimination function according to the sending timestamp and the receiving timestamp of the OAM packet sent by the node having the packet elimination function in the second-type path; and
determining an end-to-end delay of the OAM packet of the second-type path according to the third end-to-end delay and the fourth end-to-end delay.

6. The method for monitoring end-to-end delays of the plurality of paths of any of claims 1 to 5, wherein each OAM packet carries information of all nodes in the path that the OAM packet passes through; and
after acquiring the end-to-end delay of the OAM packet corresponding to each respective path, the method further comprises:
determining path information of the end-to-end delay according to the information of all nodes carried in each OAM packet.

7. The method for monitoring end-to-end delays of the plurality of paths of any of claims 1 to 5, wherein the OAM packet carries a detection type flag, and the detection type flag is used for instructing the receiving end or the controller to acquire the end-to-end delay of the OAM packet corresponding to each respective path.

8. An apparatus for monitoring end-to-end delays of a plurality of paths, comprising:
a receiving module, configured for receiving Operation, Administration, and Maintenance (OAM) packets of a service respectively sent via a plurality of paths, wherein each of the OAM packets carries a sending timestamp of a sending end which sends the OAM packet;
an acquisition module, configured for acquiring an end-to-end delay of the OAM packet corresponding to each respective path according to the sending timestamp of the OAM packet corresponding to the respective path and a marked receiving timestamp; and
a monitoring module, configured for respectively comparing the end-to-end delay of the OAM packet corresponding to the respective path with a preset end-to-end delay range, to obtain an end-to-end delay monitoring result for the OAM packet corresponding to the respective path.

9. An electronic device, comprising:
at least one processor; and
a memory communicatively connected to the at least one processor, wherein:
the memory stores instructions executable by the at least one processor which, when executed by the at least one processor, cause the at least one processor to carry out the method for monitoring end-to-end delays of the plurality of paths of any of claims 1 to 7.

10. A computer-readable storage medium, storing a computer program which, when executed by a processor, causes the processor to carry out the method for monitoring end-to-end delays of the plurality of paths of any of claims 1 to 7.
